# FASCICULE DE BREVET EUROPEEN

(11) **EP 4 025 799 B1**
(45) Date de publication et mention de la délivrance du brevet: **14.08.2024**
(21) Numéro de dépôt: 20764673.8
(22) Date de dépôt: 03.09.2020
(51) Int. Cl.: F16D 41/10, F16D 41/16

(54) **DISPOSITIF ANTI-RETOUR DE TRANSMISSION DE ROTATION**
RÜCKLAUFSPERRE FÜR ROTATIONSÜBERTRAGUNG
ANTI-RETURN DEVICE FOR ROTATION TRANSMISSION

(30) Priorité: 05.09.2019 FR 1909786
(43) Date de publication de la demande: 13.07.2022
(73) Titulaire: Safran Electronics & Defense, 75015 Paris (FR)
(72) Inventeur: DELONG, Joffrey, 77550 Moissy-Cramayel (FR); LONGINOTTI, Vincent, 77550 Moissy-Cramayel (FR)
(74) Mandataire: Casalonga
(86) Numéro de dépôt international: PCT/EP2020/074661
(87) Numéro de publication internationale: WO 2021/043934

(56) Documents cités:
- EP-A1- 0 370 319
- GB-A- 1 171 997
- KR-A- 20160 027 321
- US-A- 1 845 667

## Description

### Domaine technique

La présente invention concerne les dispositifs de transmission de rotation permettant la transmission d'un mouvement de rotation en sens unique d'un arbre d'entrée menant vers un arbre de sortie mené.

La présente invention vise à constituer un dispositif adaptable sur de nombreux dispositifs d'entraînement en rotation existants, dans un ou deux sens de rotation.

### Techniques antérieures

Les dispositifs connus de transmission de rotation permettant une transmission d'un mouvement de rotation en sens unique, d'un arbre d'entrée vers un arbre de sortie, sont généralement à friction, ce qui entrave le fonctionnement du système sur lequel ils sont insérés et ne permet pas d'avoir une robustesse des éléments d'arrêt en rotation de l'arbre de sortie. De plus, les dispositifs connus nécessitent souvent un apport énergétique externe pour la fonction d' anti-retour. Le document EP0370319A1 décrit un dispositif anti-retour de transmission d'un mouvement de rotation selon le préambule de la revendication 1, comprenant deux arbres coaxiaux, un bâti de guidage en rotation des arbres, un élément de verrouillage déplaçable en translation radiale entre une position de verrouillage et une position de déverrouillage, l'arbre d'entrée comportant des moyens de commutation de l'élément de verrouillage entre ses positions de verrouillage et de déverrouillage et avec une came ayant un profilé adapté pour déplacer radialement l'élément de verrouillage.

### Exposé de l'invention

L'invention a pour but de pallier au moins l'un des inconvénients précités et de proposer un dispositif anti-retour de transmission d'un mouvement de rotation coaxiale entre deux arbres qui soit entièrement mécanique et qui soit capable de cumuler des avantages de robustesse, d'adaptabilité et de compacité.

Au vu de ce qui précède, l'invention a pour objet un dispositif anti-retour de transmission d'un mouvement de rotation selon la revendication 1.

Selon l'invention, les moyens de commutation de l'élément de verrouillage comportent une came ayant un profilé adapté pour déplacer radialement l'élément de verrouillage lors d'une rotation de l'arbre d'entrée.

Par exemple, la came est pourvue sur une extrémité mâle de l'arbre d'entrée, ladite extrémité mâle étant engagée dans une extrémité femelle de l'arbre de sortie.

Selon l'invention, l'arbre d'entrée comprend un épaulement venant en butée contre un méplat de l'arbre de sortie pour mener en rotation l'arbre de sortie, l'atteinte de la butée par l'épaulement lors d'une rotation de l'arbre d'entrée coïncidant angulairement avec la mise en position déverrouillée de l'élément de verrouillage par la came.

Selon une forme de réalisation, les moyens de commutation de l'élément de verrouillage comportent une clavette de déverrouillage interposée entre la came et ledit élément de verrouillage, ladite clavette étant liée en translation à travers le conduit de l'arbre de sortie.

Dans un mode de réalisation, la clavette de déverrouillage est entièrement logée dans le conduit de l'arbre de sortie dans la position de déverrouillage.

Avantageusement, le dispositif comporte des moyens de rappel élastique en position de verrouillage de l'élément de verrouillage, travaillant en compression pour pousser ledit élément de verrouillage vers l'axe des arbres à l'encontre de la came ou, le cas échéant, à l'encontre de la clavette de déverrouillage.

De préférence, les moyens de rappel élastique en position verrouillée comportent un ressort lié au bâti.

En outre, le bâti peut comprendre un passage coïncidant avec le conduit de l'arbre de sortie dans la position de verrouillage, l'élément de verrouillage et la clavette de déverrouillage pouvant translater radialement au travers dudit passage dans la position de verrouillage.

L'invention concerne également un dispositif dans lequel un entraînement en rotation de l'arbre de sortie par l'arbre d'entrée et un passage en position déverrouillée surviennent sensiblement simultanément après un entraînement en rotation dudit arbre d'entrée sur moins d'un quart de tour.

### Brève description des dessins

L'invention sera mieux comprise à l'étude détaillée de quelques modes de réalisation pris à titre d'exemples non limitatifs et illustrés par les dessins annexés, sur lesquels :
[Fig 1A] représente le dispositif anti-retour de transmission coaxiale de rotation selon un premier mode de réalisation ;
[Fig 1B] représente une vue éclatée du dispositif de la figure 1A ;
[Fig 2A] représente une vue en coupe longitudinale du dispositif de la figure 1A en position verrouillée ;
[Fig 2B] représente une première vue en coupe transversale du dispositif verrouillé de la figure 2A ;
[Fig 2C] représente une deuxième vue en coupe transversale du dispositif verrouillé de la figure 2A ;
[Fig 3A] représente une vue en coupe longitudinale du dispositif de la figure 1A en position déverrouillée ;
[Fig 3B] représente une première vue en coupe transversale du dispositif déverrouillé de la figure 3A ;
[Fig 3C] représente une deuxième vue en coupe transversale du dispositif déverrouillé de la figure 3A ;
[Fig 4] représente un deuxième mode de réalisation du dispositif anti-retour de transmission coaxiale de rotation.

### Description détaillée

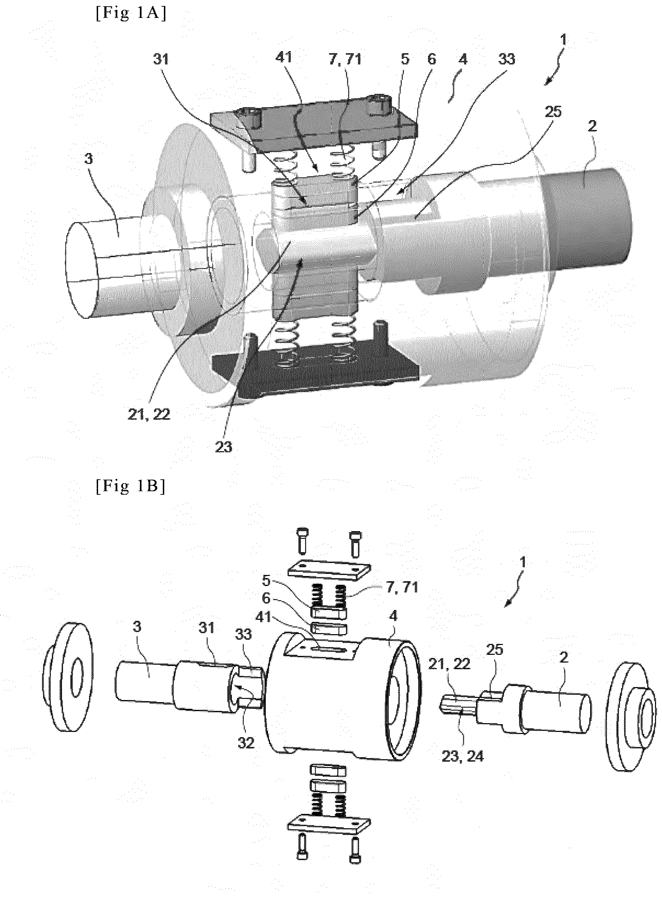

La Figure 1 illustre un dispositif anti-retour de transmission d'un mouvement de rotation 1.

Ce dispositif 1 est destiné à transmettre une rotation entre deux arbres en mettant en oeuvre une fonction anti-retour, c'est-à-dire une fonction empêchant une transmission de rotation depuis l'arbre de sortie vers l'arbre d'entrée.

Le dispositif anti-retour 1 comporte les deux arbres d'entrée 2 et de sortie 3 agencés de manière coaxiale et un bâti 4 assurant le guidage en rotation des arbres 2, 3.

Les arbres 2, 3 peuvent être insérés sur un système existant (non représenté), qui comporte par exemple un arbre piloté en rotation sur lequel on veut ajouter une fonction d'anti-retour en rotation et un arbre mené auxquels sont respectivement raccordés les arbres d'entrée et de sortie 2 et 3.

Les arbres comportent des moyens de coopération mutuelle pour la transmission d'un mouvement de rotation axiale de l'un à l'autre. L'arbre d'entrée 2 est notamment destiné à piloter l'arbre de sortie 3.

Par exemple, l'arbre d'entrée comporte une extrémité mâle 24 engagée dans une extrémité femelle 32 de l'arbre de sortie 3.

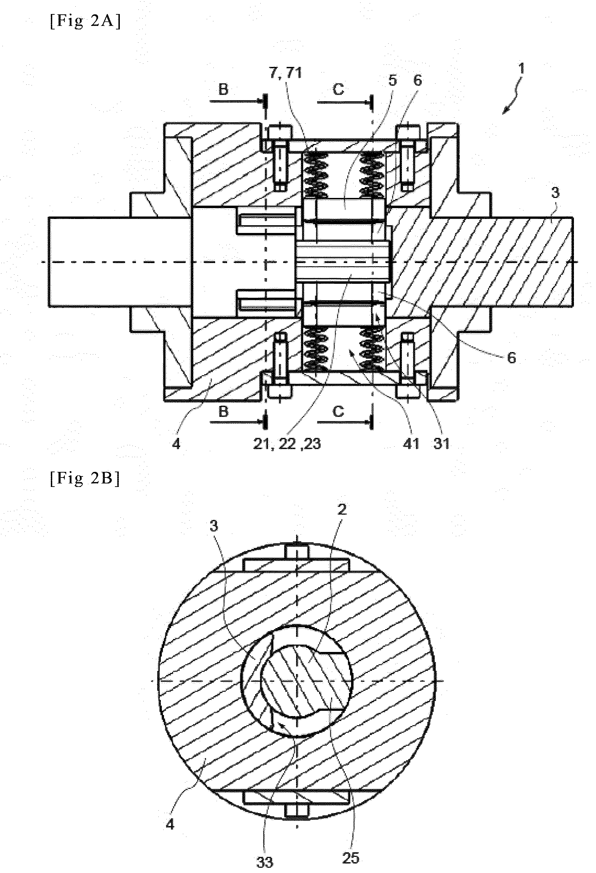

Comme illustré sur la Figure 2A, le bâti 4 permet le support et le guidage en rotation des arbres 2, 3, par exemple au moyen de paliers lisses ou de roulements.

Un élément de verrouillage 5 est inséré dans un conduit transversal 31 de l'arbre de sortie 3. L'élément de verrouillage 5 peut translater radialement à travers ledit conduit 31, entre une position radiale dite de verrouillage et une position radiale dite de déverrouillage.

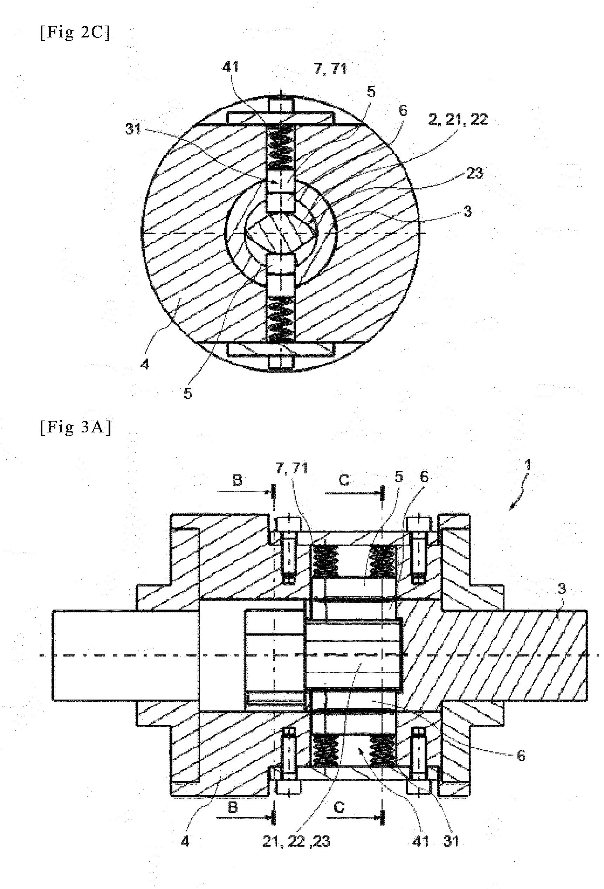

Dans la position de verrouillage illustrée sur les figures 2A, 2B et 2C, l'élément de verrouillage 5 est saillant hors du conduit 31. Il empêche alors une rotation de l'arbre de sortie 2 en butant contre le bâti 4.

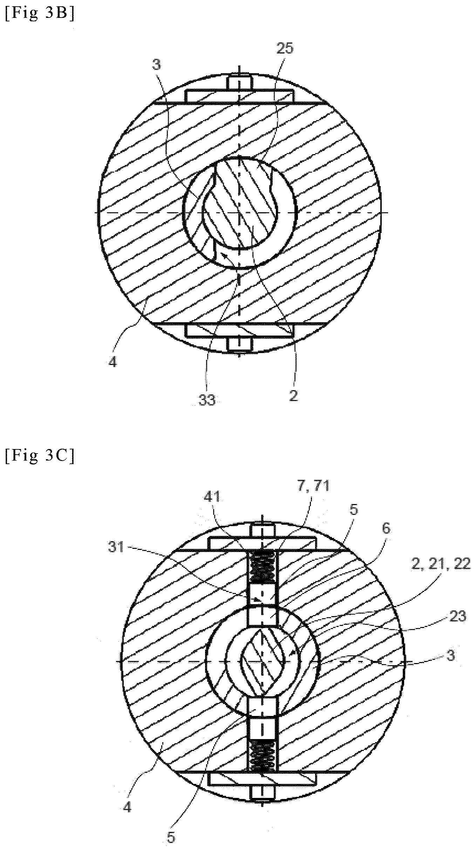

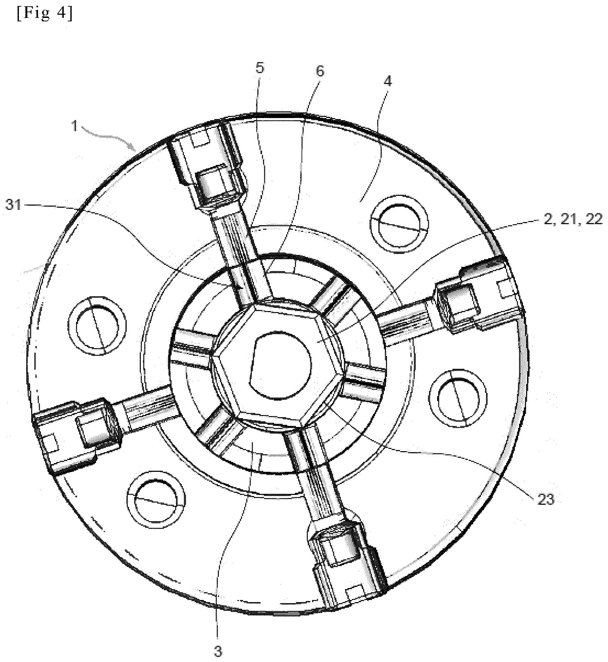

Dans la position de déverrouillage illustrée sur les figures 3A, 3B, 3C et 4, l'élément de verrouillage 5 est escamoté et ne bute pas contre le bâti, autorisant la rotation axiale de l'arbre de sortie 3.

Par exemple, le bâti comporte un passage 41 dans lequel l'élément de verrouillage 5 est escamoté dans la position de déverrouillage. Dans la position de verrouillage, le passage 41 coïncide avec le conduit 31 de l'arbre de sortie 3 et l'élément de verrouillage 5 peut alors translater radialement au travers dudit passage 41 de manière à s'escamoter et autoriser une rotation de l'arbre de sortie 2.

L'arbre d'entrée 2 comporte en outre des moyens d'entraînement de l'arbre de sortie 3 et des moyens de commutation 21 radiale de l'élément de verrouillage 5 entre ses positions radiale de verrouillage et de déverrouillage par un mouvement de rotation dudit arbre d'entrée 2. En revanche, l'arbre de sortie ne dispose d'aucun moyen de commutation de l'élément de verrouillage 5.

Un entraînement en rotation de l'arbre d'entrée 2 entraîne sensiblement simultanément un entraînement en rotation de l'arbre de sortie 3 et un passage en position déverrouillée de l'élément de verrouillage 5.

En se référant aux Figures 2B et 3B, l'arbre d'entrée 2 comporte par exemple un épaulement 25 venant en butée contre un méplat 33 de l'arbre de sortie 3 pour mener en rotation l'arbre de sortie 3. L'atteinte de la butée par l'épaulement 25 lors d'une rotation de l'arbre d'entrée 2 coïncide angulairement avec la mise en position déverrouillée de l'élément de verrouillage 5 grâce aux moyens de commutation 21.

Par exemple, les moyens de commutation 21 de l'élément de verrouillage 5 comportent une came 22 ayant un profilé 23 adapté pour déplacer radialement l'élément de verrouillage 5 lors d'une rotation de l'arbre d'entrée 2.

Avantageusement, la came 22 est prévue sur une extrémité mâle 24 de l'arbre d'entrée 2, ladite extrémité mâle 24 étant engagée dans une extrémité femelle 32 de l'arbre de sortie 3. La came 22, engagée dans l'arbre de sortie, repousse alors radialement l'élément de verrouillage 5 de l'intérieur du conduit 31 vers l'extérieur de l'arbre de sortie 3.

Le profilé 23 est par exemple un polygone. Le nombre de sommets du polygone permet de multiplier le nombre de positions de déverrouillage du dispositif 1.

Dans un premier mode de réalisation illustré en Figures 2C et 3C, le profilé 23 peut présenter une forme de losange. La position de verrouillage (Figure 2C) est alors atteinte lorsque la came 22 repousse radialement l'élément de verrouillage 5 au minimum, par sa dimension minimale, à savoir la petite hauteur du losange 23, et la position de déverrouillage (Figure 3C) est atteinte lorsque la came 22 repousse radialement l'élément de verrouillage 5 au maximum, par sa dimension maximale, à savoir la grande hauteur du losange 23.

Dans un deuxième mode de réalisation illustré en Figure 4, le profilé 23 peut présenter une section hexagonale. La position de déverrouillage telle qu'illustrée est alors atteinte lorsque la came 22 repousse radialement l'élément de verrouillage 5 par un sommet de l'hexagone 23.

Ainsi, dans le premier mode de réalisation, une rotation de l'arbre d'entrée 2 sur moins d'un quart de tour est nécessaire pour déverrouiller et entraîner en rotation l'arbre de sortie 3, tandis que dans le deuxième mode de réalisation, une rotation de vingt degrés d'angle suffit.

Les moyens de commutation 21 de l'élément de verrouillage 5 peuvent en outre comporter une clavette de déverrouillage 6 interposée entre la came 22 et l'élément de verrouillage 5. La clavette 6 est alors liée en translation à travers le conduit 31 de l'arbre de sortie 3. Elle sert de repoussoir radial de l'élément de verrouillage 5 hors du conduit 31.

En position de verrouillage (Figure 2C), la clavette 6 est située entre le conduit 31 et l'arbre de sortie 3 et ne déloge pas l'élément de verrouillage 5 du conduit 31.

En position de déverrouillage (Figure 3C), la clavette est entièrement logée dans le conduit 31 et déloge complètement l'élément de verrouillage 5 du conduit 31. La clavette 6 peut alors tourner autour de l'axe des arbres, solidairement à l'arbre de sortie 3 dont la rotation est autorisée.

La clavette 6 peut avoir une forme bombée, complémentaire du conduit 31, de manière à ne pas dépasser hors du conduit 31 en restant circonscrit dans le conduit 21 et à ne pas buter contre le bâti 4 dans la position de déverrouillage.

En outre, le dispositif 1 peut comporter des moyens de rappel élastique en position de verrouillage 7 de l'élément de verrouillage 5, travaillant en compression pour pousser l'élément de verrouillage 5 vers l'axe des arbres 2, 3, à l'encontre de la came 22.

Par exemple, les moyens de rappel élastique en position verrouillée 7 comportent un ressort 71 lié au bâti 4.

Ainsi, depuis la position de déverrouillage (Figures 3C et 4), dès lors que la position angulaire de l'arbre de sortie 3 par rapport à l'arbre d'entrée 2 est telle que le conduit 21 est aligné avec le passage 41, les moyens de rappel 7 repoussent l'élément de verrouillage 5 contre la clavette 6 dans le conduit 21. La position verrouillée est alors enclenchée par le positionnement saillant de l'élément de verrouillage 5 entre le conduit 21 et le passage 41, toute possibilité de rotation de l'arbre de sortie 3 étant alors empêchée.

Ainsi, le dispositif permet que, dans la position de déverrouillage, toute transmission en rotation hétérocinétique entre les arbres d'entrée 2 et de sortie 3, c'est-à-dire toute transmission menée par l'arbre de sortie plutôt que par les moyens d'entraînement de l'arbre d'entrée 2, entraîne un alignement du conduit 21 et du passage 41 et donc un retour en position de verrouillage grâce aux moyens de rappel 7.

On réalise ainsi un dispositif anti-retour grâce auquel un entraînement en rotation de l'arbre d'entrée 2 déverrouille les moyens de verrouillage 5 et transmet coaxialement le mouvement de rotation à l'arbre de sortie 3 mené par les moyens d'entraînement 25, 33, tandis qu'un entraînement en rotation de l'arbre de sortie 3 ne mène pas l'arbre d'entrée en rotation et déclenche un retour en position verrouillée du dispositif 1.

## Revendications

1. Dispositif anti-retour de transmission d'un mouvement de rotation (1) comportant deux arbres d'entrée (2) et de sortie (3) coaxiaux, un bâti (4) de guidage en rotation des arbres (2, 3), un élément de verrouillage (5) déplaçable en translation radiale à travers un conduit (31) de l'arbre de sortie (3) entre une position de verrouillage dans laquelle ledit élément de verrouillage (5) est saillant hors dudit conduit (31) de manière à empêcher une rotation de l'arbre de sortie (2) et une position radiale de déverrouillage dans laquelle l'élément de verrouillage (5) est escamoté de manière à autoriser la rotation axiale de l'arbre de sortie (3), l'arbre d'entrée (2) comportant des moyens de commutation de l'élément de verrouillage (21) entre ses positions de verrouillage et de déverrouillage,
les moyens de commutation (21) de l'élément de verrouillage (5) comportant une came (22) ayant un profilé (23) adapté pour déplacer radialement l'élément de verrouillage (5) lors d'une rotation de l'arbre d'entrée (2),
**caractérisé en ce que** l'arbre d'entrée (2) comprend un épaulement (25) venant en butée contre un méplat (33) de l'arbre de sortie (3) pour mener en rotation l'arbre de sortie (3), l'atteinte de la butée par l'épaulement (25) lors d'une rotation de l'arbre d'entrée (2) coïncidant angulairement avec la mise en position déverrouillée de l'élément de verrouillage (5) par la came (23).

2. Dispositif selon la revendication 1, dans lequel la came (22) est pourvue sur une extrémité mâle (24) de l'arbre d'entrée (2), ladite extrémité mâle (24) étant engagée dans une extrémité femelle (32) de l'arbre de sortie (3).

3. Dispositif selon l'une quelconque des revendications précédentes, dans lequel les moyens de commutation (21) de l'élément de verrouillage (5) comportent une clavette de déverrouillage (6) interposée entre la came (22) et ledit élément de verrouillage (5), ladite clavette (6) étant liée en translation à travers le conduit (31) de l'arbre de sortie (3).

4. Dispositif selon la revendication 3, dans lequel la clavette de déverrouillage (6) est entièrement logée dans le conduit (31) de l'arbre de sortie (3) dans la position de déverrouillage.

5. Dispositif selon l'une quelconque des revendications précédentes, comportant des moyens de rappel élastique en position de verrouillage (7) de l'élément de verrouillage (5), travaillant en compression pour pousser ledit élément de verrouillage (5) vers l'axe des arbres (2, 3) à l'encontre de la came (22) ou, le cas échéant, à l'encontre de la clavette de déverrouillage (6).

6. Dispositif selon la revendication 5, dans lequel les moyens de rappel élastique en position verrouillée (7) comportent un ressort (71) lié au bâti (4).

7. Dispositif selon l'une des revendications 5 et 6, dans lequel le bâti (4) comprend un passage (41) coïncidant avec le conduit de l'arbre de sortie (31) dans la position de verrouillage, l'élément de verrouillage (5) et la clavette de déverrouillage (6) pouvant translater radialement au travers dudit passage (41) dans la position de verrouillage.

8. Dispositif selon l'une quelconque des revendications précédentes, dans lequel un entraînement en rotation de l'arbre de sortie (3) par l'arbre d'entrée (2) et un passage en position déverrouillée surviennent sensiblement simultanément après un entraînement en rotation dudit arbre d'entrée (2) sur moins d'un quart de tour.

## Patentansprüche

1. Rückschlagvorrichtung zur Übertragung einer Drehbewegung (1), umfassend zwei koaxiale Eingangs- (2) und Ausgangswellen (3), einen Rahmen (4) zur Drehführung der Wellen (2, 3), ein Verriegelungselement (5), das in radialer Translation durch einen Kanal (31) der Ausgangswelle (3) zwischen einer Verriegelungsposition, in der das Verriegelungselement (5) aus dem Kanal (31) herausragt, um eine Drehung der Ausgangswelle (2) zu verhindern, und einer radiale Entriegelungsposition, in der das Verriegelungselement (5) zurückgezogen ist, um die axiale Drehung der Ausgangswelle (3) zu ermöglichen, verschiebbar ist, wobei die Eingangswelle (2) Schaltmittel für das Verriegelungselement (21) zwischen seiner Verriegelungs- und Entriegelungsposition umfassen,
wobei die Schaltmittel (21) für das Verriegelungselement (5) einen Nocken (22) umfassen, der ein Profil (23) hat, das dazu ausgelegt ist, das Verriegelungselement (5) bei einer Drehung der Eingangswelle (2) radial zu verschieben, **dadurch gekennzeichnet, dass** die Eingangswelle (2) eine Schulter (25) umfasst, die an einer Abflachung (33) der Ausgangswelle (3) zum Anschlag kommt, um die Ausgangswelle (3) zum Drehen zu bringen, wobei das Erreichen des Anschlags durch die Schulter (25) bei einer Drehung der Eingangswelle (2) winkelmäßig mit dem Positionieren des Verriegelungselements (5) in die Entriegelungsposition durch den Nocken (23) zusammenfällt.

2. Vorrichtung nach Anspruch 1, wobei der Nocken (22) an einem männlichen Ende (24) der Eingangswelle (2) vorgesehen ist, wobei das männliche Ende (24) mit einem weiblichen Ende (32) der Ausgangswelle (3) in Eingriff steht.

3. Vorrichtung nach einem der vorhergehenden Ansprüche, wobei die Schaltmittel (21) für das Verriegelungselement (5) einen Entriegelungskeil (6) umfassen, der zwischen der Nocke (22) und dem Verriegelungselement (5) eingefügt ist, wobei der Keil (6) translatorisch durch den Kanal (31) der Ausgangswelle (3) verbunden ist.

4. Vorrichtung nach Anspruch 3, wobei der Entriegelungskeil (6) in der Entriegelungsposition vollständig im Kanal (31) der Ausgangswelle (3) untergebracht ist.

5. Vorrichtung nach einem der vorhergehenden Ansprüche, die ferner elastische Rückstellmittel in die Verriegelungsposition (7) des Verriegelungselements (5) umfasst, die unter Kompression arbeiten, um das Verriegelungselement (5) gegen den Nocken (22) oder gegebenenfalls gegen den Entriegelungskeil (6) in Richtung der Achse der Wellen (2, 3) zu drücken.

6. Vorrichtung nach Anspruch 5, wobei die elastischen Rückstellmittel in die Verriegelungsposition (7) eine mit dem Rahmen (4) verbundene Feder (71) umfasst.

7. Vorrichtung nach einem der Ansprüche 5 und 6, wobei der Rahmen (4) einen Durchgang (41) aufweist, der mit dem Kanal der Ausgangswelle (31) in der Verriegelungsposition zusammenfällt, wobei das Verriegelungselement (5) und der Entriegelungskeil (6) in der Verriegelungsposition radial durch den Durchgang (41) verschoben werden können.

8. Vorrichtung nach einem der vorhergehenden Ansprüche, wobei ein Drehantrieb der Ausgangswelle (3) durch die Eingangswelle (2) und ein Übergang in die Entriegelungsposition im Wesentlichen gleichzeitig nach einem Drehantrieb der Eingangswelle (2) um mindestens eine Vierteldrehung erfolgen.

## Claims

1. Non-return device for transmitting a rotational movement (1) including two coaxial input (2) and output (3) shafts, a frame (4) for rotatably guiding the shafts (2, 3), a locking element (5) movable in radial translation through a duct (31) of the output shaft (3) between a locked position in which said locking element (5) projects out of said duct (31) so as to prevent a rotation of the output shaft (2) and a radial unlocked position in which the locking element (5) is retracted so as to allow the axial rotation of the output shaft (3), the input shaft (2) including means for switching the locking element (21) between its locked and unlocked positions,
the switching means (21) of the locking element (5) including a cam (22) with a profile (23) which is adapted to displace the locking element (5) radially during a rotation of the input shaft (2),
**characterised in that** the input shaft (2) comprises a shoulder (25) which abuts against a flat part (33) of the output shaft (3) in order to rotate the output shaft (3), the shoulder (25) reaching the abutment during a rotation of the input shaft (2) coinciding angularly with the cam (23) placing the locking element (5) in the unlocked position.

2. Device according to claim 1, wherein the cam (22) is provided on a male end (24) of the input shaft (2), said male end (24) being engaged in a female end (32) of the output shaft (3).

3. Device according to any one of the preceding claims, wherein the switching means (21) of the locking element (5) include an unlocking key (6) arranged between the cam (22) and said locking element (5), said key (6) being connected in translation through the duct (31) of the output shaft (3).

4. Device according to claim 3, wherein the unlocking key (6) is housed fully in the duct (31) of the output shaft (3) in the unlocked position.

5. Device according to any one of the preceding claims, including means for elastic return to the locked position (7) of the locking element (5), working with compression to push the said locking element (5) towards the axis of the shafts (2, 3) against the cam (22) or, where appropriate, against the unlocking key (6).

6. Device according to claim 5, wherein means for elastic return to the locked position (7) include a spring (71) connected to the frame (4).

7. Device according to one of claims 5 and 6, wherein the frame (4) comprises a passage (41) coinciding with the duct of the output shaft (31) in the locked position, the locking element (5) and the unlocking key (6) being able to translate radially through said passage (41) in the locked position.

8. Device according to any one of the preceding claims, wherein a rotational drive of the output shaft (3) by the input shaft (2) and a passage to the unlocked position take place substantially simultaneously after a rotational drive of said input shaft (2) through less than a quarter turn.
